# FASCICULE DE BREVET EUROPEEN

(11) **EP 2 792 940 B1**
(45) Date de publication et mention de la délivrance du brevet: **07.09.2016**
(21) Numéro de dépôt: 14166199.1
(22) Date de dépôt: 24.06.2010
(51) Int. Cl.: F21S 8/12, F21V 8/00, F21Y 115/10, F21W 101/10, F21W 101/12, F21W 101/02

(54) **Dispositif optique pour véhicule automobile**
Optische Vorrichtung für Kraftfahrzeug
Optical device for an automobile

(30) Priorité: 30.06.2009 FR 0954436
(43) Date de publication de la demande: 22.10.2014
(62) Demande divisionnaire de: 10167246.7
(73) Titulaire: VALEO VISION, 93012 Bobigny Cedex (FR)
(72) Inventeur: De lamberterie, Antoine, 75019 PARIS (FR)

(56) Documents cités:
- EP-A1- 2 161 494
- DE-A1-102005 036 018
- DE-A1-102005 048 498
- JP-A- 2006 236 588
- US-A1- 2009 027 911

## Description

L'invention concerne un dispositif optique, notamment pour véhicule automobile, tel qu'un dispositif d'éclairage ou de signalisation.

On connaît par la demande de brevet FR 2 904 680 un feu de véhicule automobile comportant trois diodes électroluminescentes (LED) et un guide de lumière en forme de tige associé à ces LED. Ce feu permet un seul type de photométrie. Un autre dispositif est connu de JP 2006 236588.

L'invention vise à proposer un nouveau dispositif optique pour véhicule automobile, tel qu'un dispositif d'éclairage ou de signalisation, permettant deux fonctions photométriques différentes défini par la revendication 1.

La technologie de type guide optique est favorable à une association de fonctions photométriques différentes dans la mesure où l'aspect allumé et la photométrie de l'une ou l'autre des fonctions peuvent être proches même si l'emplacement des sources associées à chaque fonction est différente.

Le dispositif est avantageusement agencé de manière à ce que, lorsque l'une des sources lumineuses est allumée, l'autre source lumineuse est éteinte de sorte que seule l'une des fonctions photométriques est activée à la fois.

Le dispositif peut comporter un guide de lumière auxiliaire, notamment réalisé d'un seul tenant, agencé de manière à guider la lumière depuis l'une des sources lumineuses vers le guide de lumière principal.

En variante, les sources de lumière sont associées directement au guide de lumière principal, sans utilisation d'un guide de lumière auxiliaire.

Dans un exemple de mise en oeuvre de l'invention, le guide de lumière principal et/ou l'éventuel guide de lumière auxiliaire comportent au moins deux entrées associées chacune à l'une des sources lumineuses de manière à ce que la lumière de cette source pénètre dans le guide de lumière par l'entrée associée.

Cette entrée de lumière peut comprendre une zone de couplage entre la source lumineuse et le guide de lumière auxiliaire.

Si on le souhaite, le guide de lumière principal et/ou l'éventuel guide de lumière auxiliaire comporte une unique sortie de la lumière agencée pour permettre la sortie de la lumière guidée dans ce guide lumière.

Cette sortie, lorsqu'elle est formée sur le guide auxiliaire, peut notamment comporter une zone de réflexion par exemple sensiblement conique qui réfléchit la lumière radialement pour créer une source de lumière secondaire à émission de révolution radiale.

Cette sortie peut, en variante, être sensiblement plane afin de créer une source de lumière émettant dans une direction particulière.

Par exemple le guide de lumière principal et/ou l'éventuel guide de lumière auxiliaire présente une forme générale en Y, les entrées de la lumière étant formées chacune sur une branche du haut du Y et la sortie de la lumière étant formée sur le pied du Y.

Le guide de lumière, notamment de forme en Y, peut présenter une section transversale sensiblement circulaire. Les branches du Y sont par exemple sensiblement cylindriques.

Avantageusement les entrées de lumière du guide comportent des axes qui se coupent à proximité de la sortie.

Le cas échéant, les deux branches du haut du Y sont séparées l'une de l'autre sur une hauteur d'au moins 20% de la hauteur totale du guide de lumière, notamment d'au moins 50% de cette hauteur totale.

En variante, les deux branches du Y sont jointives sensiblement sur toute leur hauteur.

Dans un autre exemple de mise en oeuvre de l'invention, le dispositif comporte deux guides de lumière auxiliaires distincts associés chacun à l'une des sources lumineuses.

Le guide de lumière principal et/ou l'éventuel guide de lumière auxiliaire est part exemple réalisé dans un matériau permettant de guider la lumière dans sa masse par réflexion totale.

Le guide lumière est par exemple réalisé avec un indice de réfraction de 1.49 à 1.59, par exemple en matériau tel que du PMMA, PC, silicone, COC, etc...

En variante, le guide de lumière auxiliaire comporte au moins un faisceau de fibres optiques.

Avantageusement le guide de lumière principal comporte un orifice, notamment traversant, agencé pour recevoir une extrémité du guide de lumière auxiliaire de manière à que la lumière quittant ce guide de lumière auxiliaire puisse pénétrer dans le guide de lumière principal.

En variante, le guide de lumière principal comporte une face externe, notamment sensiblement plane, disposée en regard de la sortie du guide de lumière auxiliaire.

Le guide de lumière principal peut être réalisé d'un seul tenant.

Si on le souhaite, la lumière provenant de l'une au moins des sources lumineuses pénètre directement dans le guide de lumière principal, à savoir sans passer dans un guide de lumière auxiliaire.

Avantageusement le guide de lumière principal comporte une zone de réflexion, notamment sensiblement conique, pour réfléchir, dans le guide de lumière principal, la lumière provenant des sources lumineuses ou, le cas échéant, du guide de lumière auxiliaire.

La zone de réflexion peut présenter une forme choisie de manière à redresser les rayons lumineux provenant alternativement des sources lumineuses, de sorte que ces rayons soient localement parallèles au guide de lumière.

Cette zone de réflexion forme un coupleur à deux foyers lorsque les sources lumineuses sont placées à proximité du guide principal, sans utilisation de guide auxiliaire.

De préférence le guide de lumière principal présente sensiblement une forme de nappe.

Dans un exemple de mise en oeuvre de l'invention, le guide de lumière principal comporte une zone de réflexion pourvue d'ondulations, choisies de manière à redresser les rayons lumineux provenant de l'une au moins des sources lumineuses.

Par exemple, le guide de lumière principal comporte des moyens de découplage, notamment des prismes, agencés pour diffuser la lumière latéralement, notamment sur une surface cylindrique du guide.

L'invention a également pour objet une LED comportant deux puces émettrices de lumière, de couleurs différentes, l'une des puces émet une lumière blanche et l'autre une lumière ambre.

L'invention pourra être mieux comprise à la lecture de la description détaillée qui va suivre, d'exemples de mise en oeuvre non limitatifs de l'invention, et à l'examen du dessin annexé, sur lequel :
- la figure 1 illustre, schématiquement et partiellement, un dispositif optique selon un exemple de mise en oeuvre de l'invention,
- la figure 2 représente, schématiquement et partiellement, suivant une coupe transversale, un dispositif optique selon un autre exemple de mise en oeuvre de l'invention,
- la figure 3 illustre, schématiquement et partiellement, un exemple de couplage entre le guide de lumière et les sources lumineuses, conformément à l'invention,
- les figures 4,5,7,9, et 10 représentent, schématiquement et partiellement, d'autres exemples de mise en oeuvre de l'invention, les figures 6 et 8 sont des exemples qui n'illustrent pas l'invention et
- la figure 11 est une vue suivant l'axe X, schématique et partielle, de la zone de réflexion de guide de lumière de la figure 6.

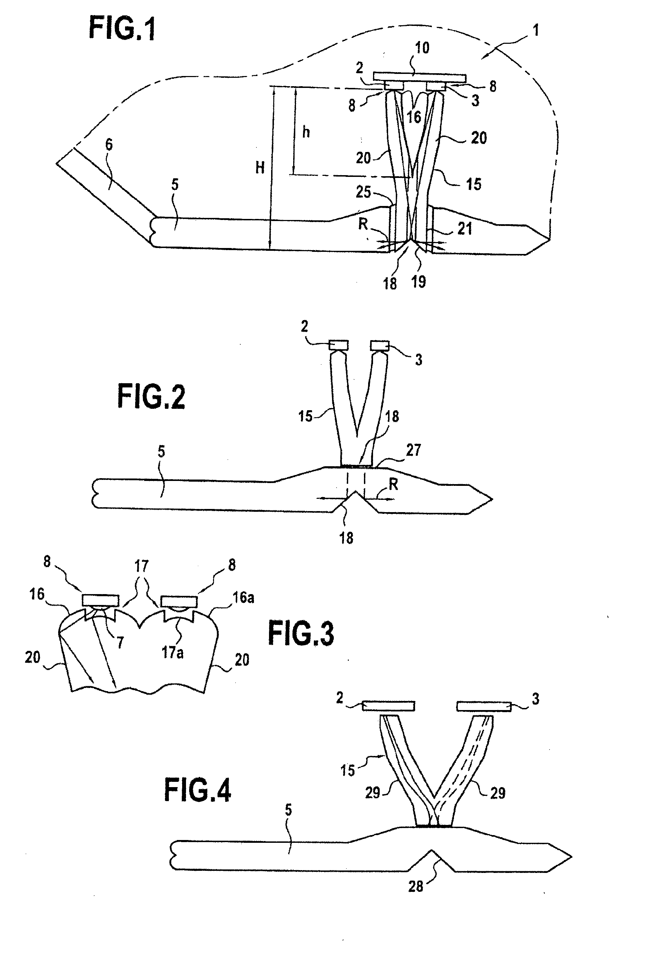

On a représenté sur la figure 1 un dispositif optique 1 pour véhicule automobile, tel qu'un dispositif d'éclairage ou de signalisation, comportant :
- les sources lumineuses 2 et 3 associées à des fonctions photométriques prédéterminées différentes,
- un guide de lumière principal 5 comportant une face de sortie 6 et agencé pour guider la lumière provenant des sources lumineuses 2 et 3 vers cette face de sortie 6 (éventuellement, pour certains rayons, après réflexion sur une face arrière du guide de lumière) de manière à ce que cette face de sortie définisse une surface éclairante commune pour les deux fonctions photométriques.

Cette surface éclairante est celle visible par des personnes à l'extérieur au véhicule.

Par exemple, l'une des fonctions photométriques correspond à un éclairage de jour, et l'autre fonction photométrique correspond à un feu clignotant de changement de direction.

Le dispositif 1 est agencé de manière à ce que, lorsque l'une des sources lumineuses 2 ;3 est allumée, l'autre source lumineuse 2 ;3 est éteinte de sorte que les fonctions photométriques soient activées alternativement.

Dans l'exemple considéré, les sources lumineuses 2 et 3 sont agencées pour émettre des lumières de couleurs différentes.

Par exemple l'une des sources lumineuses 2 ;3 est agencée pour émettre une lumière blanche associée à la fonction photométrique d'éclairage de jour et l'autre des sources lumineuses 2 ;3 est agencée pour émettre une lumière de couleur ambre associée à la fonction photométrique de feu clignotant de changement de direction.

Les sources lumineuses 2 et 3 sont formées chacune par une puce 7 émettrice de lumière d'une LED 8 (voir figure 3 notamment).

Dans l'exemple des figures 1 et 3, les sources lumineuses 2 et 3 sont formées sur des LED distinctes.

Ces LED 8 sont portées par un support commun 10, ce support comportant une feuille flexible à circuit électrique , de préférence plane.

Le dispositif 1 comporte en outre un guide de lumière auxiliaire 15, réalisé d'un seul tenant, agencé de manière à guider la lumière depuis les sources lumineuses 2 et 3 vers le guide de lumière principal 5.

Le guide de lumière auxiliaire 15 comporte deux entrées 16 associées chacune à l'une des sources lumineuses 2 et 3 de manière à ce que la lumière de cette source pénètre dans le guide de lumière par l'entrée 16 associée.

Cette entrée 16 comprend une zone de couplage 17 entre la source lumineuse 2 ;3 et le guide de lumière auxiliaire 15, permettant de collimater les rayons issus de la source.

Cette zone de couplage 17 est par exemple formée par une cavité avec un fond convexe 17a (voir figure 3 notamment).

La surface 16a autour de la zone de couplage 17 est sensiblement de forme en paraboloïde.

Le guide de lumière auxiliaire 15 comporte une unique sortie 18 de la lumière agencée pour permettre la sortie de la lumière guidée dans ce guide lumière auxiliaire 15.

Cette sortie 18 comprend une zone de réflexion ou de renvoi sensiblement conique 19.

Dans l'exemple décrit, le guide de lumière auxiliaire 15 présente une forme générale en Y, les entrées 16 de la lumière étant formées chacune sur une branche 20 du haut du Y et la sortie 18 de la lumière étant formée sur le pied 21 du Y.

Les deux branches 20 du haut du Y sont séparées l'une de l'autre sur une hauteur h d'au moins 20% de la hauteur totale H du guide de lumière 15, notamment d'au moins 50% de cette hauteur totale.

En variante, comme illustré sur la figure 3, les deux branches 20 du Y sont jointives sensiblement sur toute leur hauteur.

Le guide de lumière principal 5 comporte un orifice 25, traversant, agencé pour recevoir une extrémité du guide de lumière auxiliaire 15 de manière à que la lumière quittant ce guide de lumière auxiliaire 15 puisse pénétrer dans le guide de lumière principal 5 grâce à la forme sensiblement conique de la sortie 18 qui permet un renvoi des rayons de lumière R dans le guide 5.

En variante, comme illustré sur la figure 2, le guide de lumière principal 5 comporte une face externe sensiblement plane 27 disposée en regard de la sortie 18, sensiblement plane, du guide de lumière auxiliaire 15.

Dans ce cas, le guide de lumière principal 5 comporte une zone de réflexion ou de renvoi 28 de forme sensiblement conique pour diriger les rayons R dans le guide 5 de manière radiale.

Dans les exemples qui viennent d'être décrits, le guide de lumière auxiliaire 15 est réalisé dans un matériau permettant de guider la lumière par réflexion totale.

En variante, comme illustré sur la figure 4, le guide de lumière auxiliaire 15 comporte deux faisceaux 29 d'une multitude de fibres optiques se rejoignant de manière adéquate, notamment de façon à ce que les fibres des deux faisceaux 29 se mélangent de manière aléatoire pour avoir une répartition uniforme du flux issu de chaque LED.

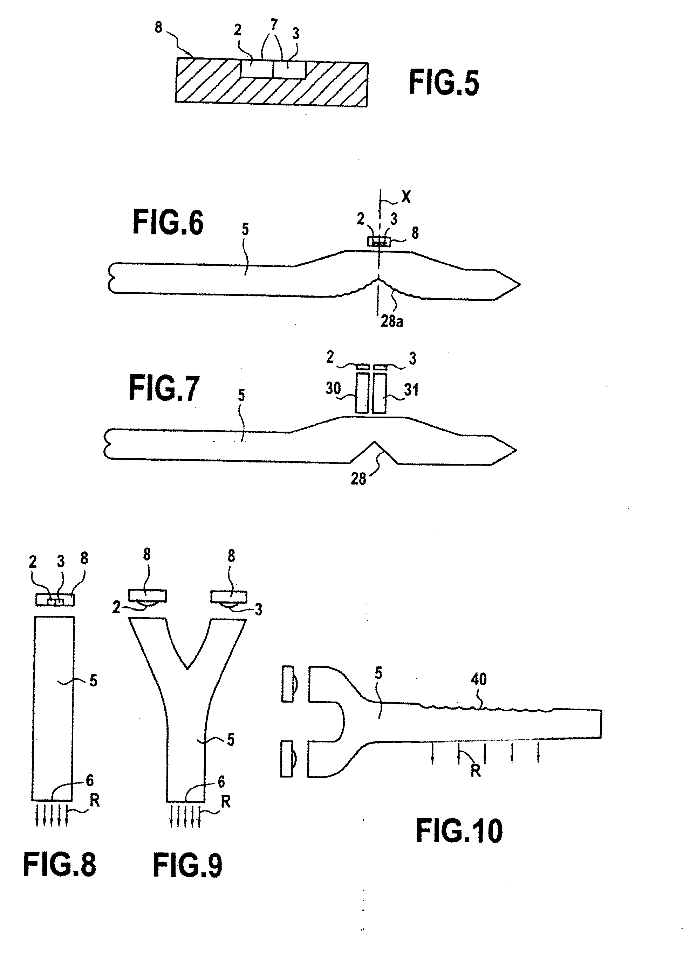

Dans un autre exemple de mise en oeuvre de l'invention, comme illustré sur la figure 7, le dispositif 1 comporte deux guides de lumière auxiliaires distincts 30 et 31 associés chacun à l'une des sources lumineuses 2 et 3.

Dans l'exemple de la figure 6, la lumière provenant des sources lumineuses 2 et 3 pénètre directement dans le guide de lumière principal 5 suivant un axe X, sans passer dans un guide de lumière auxiliaire.

Dans l'exemple décrit, les sources lumineuses 2 et 3 sont formées par des puces 7 émettrices de lumière d'une même LED 8.

Les deux puces 7 peuvent être espacées l'une de l'autre par exemple d'une distance d'1 mm.

Ces sources de lumière 2 et 3 peuvent, le cas échéant, être allumées l'une sans l'autre ou les deux en même temps.

Le guide de lumière principal 5 comporte une zone de réflexion 28a, sensiblement conique, pour réfléchir, dans le guide de lumière principal 5, la lumière provenant des sources lumineuses 2 et 3.

Cette zone de réflexion 28a peut par exemple présenter, en section suivant un plan contenant l'axe X, un profil généralement parabolique.

Dans ce cas, la génératrice du cône est une parabole au lieu d'être une droite.

La zone de réflexion 28a présente, au moins localement, une forme sensiblement ondulée choisie de manière à redresser les rayons lumineux provenant alternativement des sources lumineuses 2 et 3. Cette zone de réflexion 28a forme un coupleur à deux foyers.

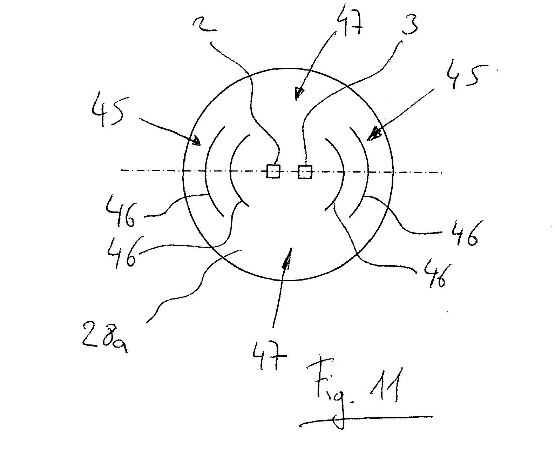

Par exemple, comme illustré sur la figure 11, la zone de réflexion 28a peut comporter deux régions 45 pourvues d'ondulations 46, ces régions étant par exemple alternées avec deux régions 47 qui en sont dépourvues.

Dans les exemples décrits, le guide de lumière principal 5 présente sensiblement une forme de nappe.

Dans l'exemple décrit à la figure 8, le guide principal 5 présente une forme sensiblement cylindrique, associé à une LED 8 à deux puces 2 et 3.

Dans l'exemple illustré à la figure 9, le guide de lumière principal 5 présente une forme en Y à l'instar du guide auxiliaire précédemment décrit, associé à deux LED 8 pour chaque branche du Y.

Dans les exemples des figures 8 et 9, la face de sortie 6 est formée sur une surface sensiblement en disque.

En variante, comme illustré sur la figure 10, le guide de lumière principal 5, de forme en Y, comporte des moyens de découplage 40, formés par exemple par des prismes, agencés pour diffuser la lumière latéralement, notamment sur une surface cylindrique du guide.

## Revendications

1. Dispositif optique (1) pour véhicule automobile, tel qu'un dispositif d'éclairage ou de signalisation, ce dispositif comportant :
- au moins deux sources lumineuses (2 ;3) associées à des fonctions photométriques prédéterminées différentes, l'une des fonctions photométriques correspondant à un éclairage de jour, et l'autre fonction photométrique correspondant à un feu clignotant de changement de direction, l'une des sources lumineuse étant agencée pour émettre une lumière blanche associée à la fonction photométrique d'éclairage de jour et l'autre des sources lumineuse étant agencée pour émettre une lumière de couleur ambre associée à la fonction photométrique de feu clignotant de changement de direction
- un guide de lumière principal (5) comportant une face de sortie (6) et agencé pour guider la lumière provenant desdites sources lumineuses vers cette face de sortie de manière à ce que cette face de sortie définisse une surface éclairante commune pour les deux fonctions photométriques où
les deux sources lumineuses sont formées chacune par une puce émettrice de lumière d'une LED (8), les sources lumineuses étant formées sur des LED (8) distinctes, les LED (8) étant portées par un support commun (10), le dispositif étant **caractérisé par le fait que** ce support comporte une feuille flexible à circuit électrique.

2. Dispositif selon la revendication 1, **caractérisé par le fait qu'**il comporte un guide de lumière auxiliaire (15), notamment réalisé d'un seul tenant, agencé de manière à guider la lumière depuis l'une des sources lumineuses vers le guide de lumière principal.

3. Dispositif selon la revendication 1, **caractérisé par le fait que** les sources de lumière sont associées directement au guide de lumière principal (5).

4. Dispositif selon l'une quelconque des revendications précédentes, **caractérisé par le fait que** le guide de lumière principal et/ou l'éventuel guide de lumière auxiliaire (15) comportent au moins deux entrées (16) associées chacune à l'une des sources lumineuses de manière à ce que la lumière de cette source pénètre dans le guide de lumière par l'entrée associée.

5. Dispositif selon la revendication 4, **caractérisé par le fait que** le guide de lumière de lumière principal (5) et/ou l'éventuel guide de lumière auxiliaire (15) présente une forme générale en Y, les entrées de la lumière étant formées chacune sur une branche du haut du Y et la sortie de la lumière étant formée sur le pied du Y.

6. Dispositif selon la revendication 4 en combinaison avec la revendication 2, **caractérisé par le fait que** l'entrée de lumière comprend une zone de couplage entre la source et le guide de lumière auxiliaire.

7. Dispositif selon la revendication 5, **caractérisé par le fait que** la zone de couplage est formée par une cavité avec un fond convexe, la surface autour de la zone de couplage étant par exemple sensiblement de forme en paraboloïde.

8. Dispositif selon l'une des revendications précédentes, **caractérisé par le fait que** le guide de lumière principal est réalisé dans un matériau permettant de guider la lumière dans sa masse par réflexion interne totale.

9. Dispositif selon la revendication précédente, **caractérisé par le fait que** le guide de lumière est réalisé avec un indice de réfraction de 1,49 à 1,59.

10. Dispositif selon l'une quelconque des revendications précédentes, **caractérisé par le fait que** le guide de lumière principal présente sensiblement une forme de nappe.

11. Dispositif selon l'une des revendications précédentes, **caractérisé par le fait que** le guide de lumière principal comporte une zone de réflexion pour réfléchir, dans le guide de lumière principal, la lumière provenant des sources lumineuses, la forme de la zone de réflexion étant agencée de manière à ce que ces rayons soient redressés de sorte à être localement parallèles au guide de lumière.

12. Dispositif selon l'une des revendications précédentes, **caractérisé par le fait que** le guide de lumière principal (5) comporte des moyens de découplage (40), notamment des prismes, agencés pour diffuser la lumière latéralement, notamment sur une surface cylindrique du guide.

## Patentansprüche

1. Optische Vorrichtung (1) für Kraftfahrzeuge, etwa eine Beleuchtungs- oder Signalgebungsvorrichtung, wobei die Vorrichtung umfasst:
- wenigstens zwei Lichtquellen (2; 3), die verschiedenen vorbestimmten Lichtfunktionen zugeordnet sind, wobei die eine Lichtfunktion einem Tagfahrlicht entspricht und die andere Lichtfunktion einem Richtungsanzeigeblinklicht entspricht, wobei die eine Lichtquelle dazu ausgebildet ist, ein weißes Licht zu emittieren, das der Lichtfunktion Tagfahrlicht zugeordnet ist, und die andere Lichtquelle dazu ausgebildet ist, ein orangefarbiges Licht zu emittieren, das der Lichtfunktion Blinklicht zugeordnet ist,
- einen Hauptlichtleiter (5), der eine Austrittsfläche (6) aufweist und dazu ausgebildet ist, das von den Lichtquellen stammende Licht zu dieser Austrittsfläche zu leiten, derart, dass die Austrittsfläche eine für beide Lichtfunktionen gemeinsame Leuchtfläche bildet,
wobei die beiden Lichtquellen jeweils von einem lichtemittierenden Chip einer LED (8) gebildet sind und die Lichtquellen auf separaten LEDs (8) gebildet sind, wobei die LEDs (8) von einem gemeinsamen Träger (10) getragen werden,
wobei die Vorrichtung **dadurch gekennzeichnet ist, dass** der gemeinsame Träger eine flexible Folie mit einem elektrischen Schaltkreis aufweist.

2. Vorrichtung nach Anspruch 1,
**dadurch gekennzeichnet, dass** sie einen insbesondere einstückig ausgeführten zusätzlichen Lichtleiter (15) umfasst, der so ausgebildet ist, dass das Licht von einer der Lichtquellen zum Hauptlichtleiter geleitet wird.

3. Vorrichtung nach Anspruch 1,
**dadurch gekennzeichnet, dass** die Lichtquellen dem Hauptlichtleiter (5) unmittelbar zugeordnet sind.

4. Vorrichtung nach einem der vorhergehenden Ansprüche,
**dadurch gekennzeichnet, dass** der Hauptlichtleiter und/oder der mögliche zusätzliche Lichtleiter (15) wenigstens zwei Eintrittsflächen (16) aufweisen, die jeweils einer der Lichtquellen zugeordnet sind, derart, dass das Licht dieser Lichtquelle durch die zugeordnete Eintrittsfläche in den Lichtleiter eindringt.

5. Vorrichtung nach Anspruch 4,
**dadurch gekennzeichnet, dass** der Hauptlichtleiter (5) und/oder der mögliche zusätzliche Lichtleiter (15) allgemein die Form eines Y aufweisen, wobei die Lichteintrittsflächen jeweils an einem oberen Schenkel des Y gebildet sind und die Lichtaustrittsfläche am Fuß des Y gebildet ist.

6. Vorrichtung nach Anspruch 4 in Verbindung mit Anspruch 2,
**dadurch gekennzeichnet, dass** die Lichteintrittsfläche zwischen der Lichtquelle und dem zusätzlichen Lichtleiter einen Einkopplungsbereich aufweist.

7. Vorrichtung nach Anspruch 5,
**dadurch gekennzeichnet, dass** der Einkopplungsbereich durch eine Höhlung mit einem konvexen Boden gebildet ist, wobei die Fläche um den Einkopplungsbereich zum Beispiel im Wesentlichen paraboloidförmig ist.

8. Vorrichtung nach einem der vorhergehenden Ansprüche,
**dadurch gekennzeichnet, dass** der Hauptlichtleiter aus einem Material ausgeführt ist, das es erlaubt, das Licht durch interne Totalreflexion in seiner Masse zu leiten.

9. Vorrichtung nach dem vorhergehenden Anspruch,
**dadurch gekennzeichnet, dass** der Lichtleiter mit einem Brechungsindex von 1,49 bis 1,59 ausgeführt ist.

10. Vorrichtung nach einem der vorhergehenden Ansprüche,
**dadurch gekennzeichnet, dass** der Hauptlichtleiter im Wesentlichen eine Flächenform aufweist.

11. Vorrichtung nach einem der vorhergehenden Ansprüche,
**dadurch gekennzeichnet, dass** der Hauptlichtleiter einen Reflexionsbereich aufweist, um in dem Hauptlichtleiter das von den Lichtquellen stammende Licht zu reflektieren, wobei die Form des Reflexionsbereichs so ausgebildet ist, dass die Lichtstrahlen solchermaßen ausgerichtet werden, dass sie lokal parallel zum Lichtleiter sind.

12. Vorrichtung nach einem der vorhergehenden Ansprüche,
**dadurch gekennzeichnet, dass** der Hauptlichtleiter (5) Auskopplungsmittel (40), insbesondere Prismen, aufweist, die dazu ausgebildet sind, das Licht seitlich, insbesondere auf eine Zylinderfläche des Lichtleiters zu streuen.

## Claims

1. Optical device (1) for a motor vehicle, such as a lighting or signalling device, this device comprising:
- at least two light sources (2; 3) associated with different predetermined photometric functions, one of the photometric functions corresponding to daytime lighting, and the other photometric function corresponding to a direction-change flashing light, one of the light sources being arranged to emit a white light associated with the daytime-lighting photometric function and the other one of the light sources being arranged to emit an amber light associated with the direction-change flashing light photometric function;
- a main light guide (5) comprising an exit face (6) and arranged to guide the light coming from said light sources to this exit face so that this exit face defines a common illuminating surface for the two photometric functions; where
the two light sources are each formed by a light-emitting chip of an LED (8), the light sources being formed on separate LEDs (8), the LEDS (8) being carried by a common support (10), the device being **characterised by** the fact that this support comprises a flexible leaf with an electrical circuit.

2. Device according to claim 1, **characterised by** the fact that it comprises an auxiliary light guide (15), in particular produced in a single piece, arranged so as to guide the light from one of the light sources to the main light guide.

3. Device according to claim 1, **characterised by** the fact that the light sources are associated directly with the main light guide (5).

4. Device according to any one of the preceding claims, **characterised by** the fact that the main light guide and/or any auxiliary light guide (15) comprises at least two entrances (16) each associated with one of the light sources so that the light from this source enters the light guide through the associated entrance.

5. Device according to claim 4, **characterised by** the fact that the main light guide (5) and/or any auxiliary light guide (15) has a roughly Y shape, the entrances for the light each being formed on an arm of the top of the Y and the light exit being formed on the foot of the Y.

6. Device according to claim 4 in combination with claim 2, **characterised by** the fact that the light entrance comprises a coupling zone between the source and the auxiliary light guide.

7. Device according to claim 5, **characterised by** the fact that the coupling zone is formed by a cavity with a convex bottom, the surface around the coupling zone being for example substantially paraboloid in shape.

8. Device according to one of the preceding claims, **characterised by** the fact that the main light guide is produced from a material making it possible to guide the light in its mass by total internal reflection.

9. Device according to the preceding claim, **characterised by** the fact that the light guide is produced with a refractive index of 1.49 to 1.59.

10. Device according to any one of the preceding claims, **characterised by** the fact that the main light guide is substantially in the form of a sheet.

11. Device according to one of the preceding claims, **characterised by** the fact that the main light guide comprises a reflection zone for reflecting, in the main light guide, the light coming from the light sources, the form of the reflection zone being arranged so that these rays are rectified so as to be locally parallel to the light guide.

12. Device according to one of the preceding claims, **characterised by** the fact that the main light guide (5) comprises decoupling means (40), in particular prisms, arranged to diffuse the light laterally, in particular on a cylindrical surface of the guide.
